Europäisches Patentamt

European Patent Office

Office européen des brevets

(19)

(11) Veröffentlichungsnummer: **0 257 024 B1**

(12) **EUROPÄISCHE PATENTSCHRIFT**

(45) Veröffentlichungstag der Patentschrift:
**10.04.91 Patentblatt 91/15**

(51) Int. Cl.$^5$: **B01D 53/36**

(21) Anmeldenummer: **86901380.5**

(22) Anmeldetag: **19.02.86**

(86) Internationale Anmeldenummer:
**PCT/EP86/00072**

(87) Internationale Veröffentlichungsnummer:
**WO 87/04947 27.08.87 Gazette 87/19**

(54) **VERFAHREN ZUR SELEKTIVEN BESEITIGUNG VON STICKOXIDEN AUS ABGASEN.**

(43) Veröffentlichungstag der Anmeldung:
**02.03.88 Patentblatt 88/09**

(45) Bekanntmachung des Hinweises auf die
Patenterteilung:
**10.04.91 Patentblatt 91/15**

(84) Benannte Vertragsstaaten:
**AT BE DE FR GB IT NL SE**

(56) Entgegenhaltungen:
**WO-A-86/01431**
**DE-A- 2 360 255**

(73) Patentinhaber: **Kraftanlagen AG.**
**Im Breitspiel 7**
**W-6900 Heidelberg 1 (DE)**

(72) Erfinder: **RIEKERT, Lothar**
**Im Eichbäumle 21**
**W-7500 Karlsruhe 1 (DE)**
Erfinder: **KOTTER, Michael**
**Frühmessweinberg 22**
**W-7520 Bruchsal 4 (DE)**
Erfinder: **WEYLAND, F.**
**Theodor-Heuss-Strasse 117**
**W-6906 Leimen 3 (DE)**

(74) Vertreter: **Helber, Friedrich G., Dipl.-Ing. et al**
**Giesser Weg 47**
**W-6144 Zwingenberg (DE)**

EP 0 257 024 B1

## Beschreibung

Die Erfindung betrifft ein Verfahren zur selektiven Beseitigung von Stickoxiden aus Abgasen mittels eines Reduktionsmittels unter Verwendung von katalytisch wirkenden Festkörpern, die aufgrund ihres strukturellen Aufbaus und/oder Ausbildung als Schüttbett mit den Abgasen durchströmbar sind.

Es ist bekannt, zur selektiven Reduktion von Stickoxiden in den Abgasen von Feuerungsanlagen Ammoniak als Reduktionsmittel dampfförmig in Mischung mit Luft als Trägergas unter Druck oder in Wasser gelöst drucklos in die aus der Feuerungsanlage austretenden Abgase einzuleiten. Durch Mischstrecken mit entsprechenden Einbauten innerhalb der weiterführenden Abgaskanäle wird versucht, im Abgasstrom bis zum Eintritt in den Katalysator eine strähnenfreie Ammoniak- und Temperaturverteilung zu erhalten. Der Katalysator ist unter Berücksichtigung optimaler Reaktionstemperaturen innerhalb der Abgasführung dem umlaufenden Regenerativ-Wärmetauscher zur Übertragung der Abgaswärme an die der Feuerung zuzuführende Verbrennungsluft vorgeschaltet. Als Katalysatoren haben sich vor allem Festbett-Katalysatoren mit vertikal nach unten gerichteter Abgasströmung bewährt, von denen mehrere von den zu entstickenden Abgasen im Wechsel beaufschlagt werden. Die Wabenstruktur dieser Festbett-Katalysatoren enthält als katalytisch wirkende Stoffe Vanadiumverbindungen. Diese Vanadiumverbindungen begünstigen die Umsetzung der Stickoxide mit dem zuvor in den Abgasstrom eingeleiteten und auf dem Weg bis zum Katalysator unter feiner Aufteilung eingemischten Ammoniak. Die Reaktion mit den in den Abgasen enthaltenen Stickoxiden führt im wesentlichen zu molekularem Stickstoff und Wasser als Reaktionsprodukten, die unschädlich in die Umgebung abgeleitet werden können. Der beim Durchgang der Abgase durch den Katalysator auftretende erhebliche Druckverlust ist bei der Bemessung des Abgasgebläses zu berücksichtigen. Durch eine vertikal nach unten gerichtete Strömung innerhalb des Katalysators soll der Ablagerung fester Verunreinigungen im Katalysator-innern entgegengewirkt bzw. diese in Grenzen gehalten werden. Nach einer gewissen Zeit der Beaufschlagung auftretende Beläge werden durch Blasen mittels Druckluft bzw. Dampf diskontinuierlich abgelöst und zugleich aus dem Katalysatorbett ausgetragen. Die Standzeit der katalytisch wirkenden Stoffe des Katalysatorbetts beträgt je nach Kesselbauart, Fahrweise und Zusammensetzung der eingesetzten Brennstoffe mehr als 2 Jahre.

Das in den aus dem Katalysator austretenden entstickten Abgasen noch enthaltene restliche Ammoniak muß vor deren Eintritt in die Abgaswäsche zur Beseitigung von Schwefeloxiden noch entfernt werden, um andernfalls in der Abgaswäsche ablaufende Reaktionen zu vermeiden, deren Produkte das Reinigungsergebnis negativ beeinflussen und zu Problemen bei der Reinigung der entstehenden Abwässer führen können.

Nach einem nicht veröffentlichten Verfahren wurde bereits im Zusammenhang mit relativ zu den Anschlußkanälen der zu entstickenden Abgase und der Reingase bewegten Trägern katalytisch wirksamer Oberflächen vorgeschlagen, das Reduktionsmittel den Reingasen, beispielsweise der Verbrennungsluft, vor Eintritt in den Katalysator zuzumischen (WO 86/01431). Die adsorptive Beladung der katalytisch wirkenden Oberflächen mit dem Reduktionsmittel, z.B. Ammoniak, ist hierbei an dessen Zugabe im Überschuß und einen erhöhten Reduktionsmittelverbrauch gebunden.

Der Erfindung liegt die Aufgabe zugrunde, ein Verfahren zur selektiven Beseitigung von Stickoxiden in Abgasen unter Verwendung von katalytisch wirkenden Festkörpern anzugeben, bei welchen die Reduktion der Stickoxide wesentlich verbessert wird, indem das Reduktionsmittel und die katalytisch wirkenden Stoffe in den Katalysatoren besser ausgenutzt, die katalytischen Eigenschaften über längere Betriebszeiten aufrechterhalten und unerwünschte Nebenreaktionen vermieden werden.

Unter Berücksichtigung der Erkenntnis, daß die Umwandlung von Stickoxiden, die sich zu ca. 95% aus Stickstoffmonoxid und zu ca. 5% aus Stickstoffdioxid zusammensetzen, in molekularen Stickstoff und Wasser nicht allein vom Verhältnis der Menge des eingeleiteten Reduktionsmittels zum Gehalt an Stickoxiden in den Abgasen sowie Temperaturniveau der Abgase, sondern in wesentlichem Umfang von der Wirksamkeit des Katalysators abhängt, wird diese Aufgabe ausgehend von einem Verfahren der eingangs erwähnten Art, wobei das Reduktionsmittel gegebenenfalls in Mischung mit einem Trägergas und die Stickoxide enthaltenden Abgase periodisch alternierend mit dem katalytisch wirkenden Festkörper bzw. Abschnitten desselben derart in Berührung gebracht werden, daß das Reduktionsmittel durch einen oder mehrere Sektorabschnitte und die zu entstickenden Abgase zugleich durch andere Sektorabschnitte des relativ zu den Anschlußkanälen des Reduktionsmittels und der Abgase schrittweise oder kontinuierlich bewegten katalytisch wirkenden Festkörpers geführt, und daß ferner parallel zu den Abgasen Reingase durch den katalytisch wirkenden Festkörper geführt werden, erfindungsgemäß dadurch gelöst, daß das Reduktionsmittel direkt dem Reingassektor des katalytisch wirkenden Festkörpers zugeführt wird. Durch diese Verfahrensweise wird nunmehr das Reduktionsmittel vor der betrieblichen Beaufschlagung des katalytisch wirkenden Festkörpers in diesen eingeführt. Dabei wird das Reduktionsmittel im katalytisch wirkenden Festkörper gespeichert oder dieser selbst derart verändert, daß er gegenüber den nachfolgend in ihn eingeleiteten Abgasen enthaltenen Stickoxiden reaktionsbereit ist und selektiv mit diesen reagiert. Bei der Verwendung von Ammoniak als Reduktionsmittel wurde gefunden, daß die früher bei der Einspeisung von Ammoniak in die Abgase von Feuerungsanlagen und Vermischung mit diesen vor der Einleitung in Katalysatoren beobachtete Bildung von Ammoniumbisulfat als eine der Entstickung vorausgehende unerwünschte Reaktion nahezu vollständig unterbunden wird. Im Vordergrund steht hierbei nicht eine Einsparung an eingesetzten Reduktionsmitteln, sondern vor allem das Ausschalten störender Niederschläge, welche die Katalysatoren und/oder diesen nachgeschaltete Anlagenteile zusetzen bzw. die aktive Oberfläche der Katalysatoren zur Entstickung von Abgasen aus Kesselanlagen mechanisch vergiften.

Mit Vorteil kann das Reduktionsmittel in zumindest einem weiteren Sektor zu dem von den zu entstickenden Abgasen und dem von den Reingasen durchströmten Sektor dem katalytisch wirkenden Festkörper zugeführt werden. Der katalytisch wirkende Festkörper wird durch Reingase einer ständigen Selbstreinigung unterworfen, wobei dann auch die wärmeübertragenden Eigenschaften des Festkörpers genutzt werden können, wenn Abschnitte der Anschlußkanäle des Reduktionsmittels bzw. zugleich des gasförmigen Trägers, die der zu entstickenden Abgase und – gegebenenfalls – die von Reingasen relativ zu dem katalytisch wirkenden Festkörper einer schrittweisen bzw. kontinuierlichen Drehbewegung unterworfen werden. Beispielsweise können abgase entstickt und abgekühlt und zugleich als Reingase durch den Festkörper geführte Frischluft zur Abreinigung des Katalysatorbetts eingesetzt werden, die schließlich nachfolgend als vorgewärmte Verbrennungsluft für die Feuerungsanlage genutzt werden.

Für ein Verfahren zur selektiven Beseitigung von Stickoxiden aus Abgasen, bei dem die Stickoxide enthaltenden Abgase periodisch alternierend im Wechsel mit Reingasen durch jeweils einen von wenigstens zwei statischen, katalytisch wirkenden Festkörpern bzw. Abschnitte desselben geführt werden, wird das Reduktionsmittel, gegebenenfalls in Mischung mit einem Trägergas, zeitlich vor den zu entstickenden Abgasen dem jeweils zugeordneten katalytisch wirkenden Festkörper zugeleitet. Dieses bietet den Vorteil, daß bei gleichbleibender Kesselleistung in der Leistung erheblich abfallende katalytisch wirkende Festkörper – sei es, daß sie verschmutzt oder sei es, daß sie vergiftet sind – außer Betrieb genommen und gereinigt bzw. regeneriert werden können.

Durch die Führung des Reduktionsmittels direkt zu den Oberflächen des katalytisch wirkenden Festkörpers werden diese mit dem Reduktionsmittel angereichert bzw. dieses in den der Oberfläche nahen Schichten gespeichert, bevor ein Kontakt mit den Stickoxiden in den Abgasen erfolgt, so daß unerwünschte Nebenreaktionen in vorteilhafter Weise unterdrückt werden.

Durch die Verwendung eines Düsenrohrs zur Einleitung des Reduktionsmittels wird dieses in vorteilhafter Weise in Teilströme aufgeteilt und gezielt auf dem Weg über die Reingase als Trägermittel dem katalytisch wirkenden Festkörper zugeführt. Es empfiehlt sich, bei umlaufenden, katalytisch wirkenden Festkörpern hierzu die Eindüsung örtlich dem Übertritt der Sektoren von dem Reingaskanal zu dem Abgaskanal zuzuordnen.

Eine besonders vorteilhafte Lösung des Reduktionsmittel-Verbrauchs und der gezielten Einspeisung desselben in den katalytisch wirkenden Festkörper ergibt sich durch Verwendung von gegenüberliegenden Stirnflächen des Festkörpers zugeordneten Sonden oder durch Ausbildung eines weiteren Kanals zwischen den Kanälen für die Abgase bzw. die Reingase, um das Reduktionsmittel so außerhalb des katalytisch wirkenden Festkörpers über einen Bypaß zurückführen zu können. Hierbei kann das Reduktionsmittel im Kreislauf geführt und zusätzlich kontinuierlich oder diskontinuierlich Reduktionsmittel in den kreislauf nachgespeist werden.

Dabei kann es desweiteren von Vorteil sein, wenn die Einspeisung des zusätzlichen Reduktionsmittels in den Kreislauf abhängig von auf der Austrittsseite des katalytiscch wirkenden Festkörpers gemessenen Werten des Reduktionsmittel-Verbrauchs geregelt wird.

Für die Förderung des Reduktionsmittels innerhalb des Kreislaufs ergeben sich verschiedene Möglichkeiten. Neben der Verwendung von Förderorganen, beispielweise eines Gebläses, kommt auch der Einsatz eines in den Kreislauf laufend eingespeisten Reduktionemittels als treibmittel für den zurückzuführenden Reduktionsmittelstrom in Frage.

Wenn das Reduktionsmittel im Kreislauf in der erwähnten Weise durch ein Gebläse oder ein anderes Förderorgan umgewälzt wird, kann es zweckmäßig sein, das im Kreislauf geführte Reduktionsmittel auf der Austrittsseite des Festkörpers bzw. im hieran anschließenden, jedoch vor der Einspeisung von zusätzlichem Reduktionsmittel und vor dem Förderorgan gelegenen Abschnitt des Reduktionsmittel-Kreislaufs zu drosseln, um so innerhalb des katalytisch wirkenden Festkörpers den Druck im Kreislauf zu erhöhen. Es hat sich gezeigt, daß auf diese Weise eine verstärkte Bindung von Reduktionsmittel an die katalytisch wirkenden Oberflächen des Festkörpers und somit eine Erhöhung der Katalysatorwirkung erreicht wird.

Nach den vorgestellten Lösungen wird das Reduktionsmittel dem katalytisch wirkenden Festkörper mit höheren Konzentrationen angeboten und innerhalb desselben gezielt eine größere Menge von Reduktionsmittel, beispielsweise Ammoniak, zur Reaktion mit den Stickoxiden in den Abgasen dargeboten, wodurch eine verstärkte Umsetzung von Stickoxiden erreicht wird. Wesentlich ist gerade in diesem Zusammenhang, daß hierbei ein Verlust von unverbrauchtem Reduktionsmittel aus dem katalytisch wirkenden Festkörper mit den damit verbundenen Folgen für nachfolgende Anlagekomponenten, beispielsweise den Komponenten einer nachgeschalteten Abgas-Entschwefelungs anlage, wirksam begegnet werden kann.

Die aufgezeigten Lösungen haben nicht nur Bedeutung für die Entstickung von Abgasen aus Feuerungs-, beispielsweise Kesselanlagen, sondern sie können in gleicher Weise mit Vorteil für die Entstickung von Abgasen von Verbrennungsmotoren – beispielsweise in statischen Mototorenprüfständen – eingesetzt werden.

Die Erfindung ist nachstehend in Verbindung mit der Zeichnung näher erläutert, und zwar zeigt jeweils in schematischer Darstellung :

Fig. 1 die Einspeisung des Reaktionsmittels in einen von den zu entstickenden Abgasen und zusätzlich reiner Luft durchströmten, relativ zu den Anschlußkanälen bewegten katalytisch wirkenden Festkörper ;

Fig. 2 die Einspeisung des Reduktionsmittels in im Wechsel beaufschlagte, statische katalytisch wirkende Festkörper ; und

Fig. 3 die Einspeisung des Reduktionsmittels in einen – entsprechend Fig. 1 – relativ zu seinen Anschlußkanälen bewegten katalytisch wirkenden Festkörper, wobei das Reduktionsmittel jedoch im Kreislauf durch den Festkörper geführt wird.

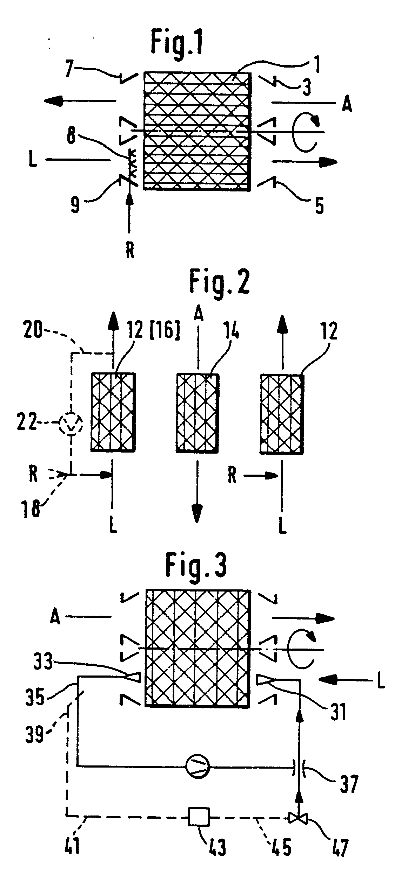

Für das in Fig. 1 dargestellte Beispiele ist angenommen, daß das Reduktionsmittel gegebenenfalls in Mischung mit einem Trägergas kontinuierlich über den Luftstrom L innerhalb eines sektorförmigen Abschnittes mit einem katalytisch wirkenden Festkörper 1 in Berührung gebracht wird. Hierzu wird der katalytisch wirkende Festkörper innerhalb eines (nicht gezeigten) Gehäuses relativ zu dessen Anschlußkanälen für Luft- und Abgase kontinuierlich oder diskontinuierlich bewegt. Im dargestellten Fall erfolgt diese Bewegung durch eine Drehung des Festkörpers um seine Längsmittelachse. Beim dargestellten Ausführungsbeispiel möge der Träger des katalytisch wirkenden Festkörpers 1 umlaufen, während die Anschlußkanäle oder Gasanschlüsse 3, 5 bzw. 7, 9 vor dessen gegenüberliegenden Stirnseiten ruhen mögen. Die Luft als Rein- bzw. Trägergas tritt über den als Stutzen ausgebildeten Anschlußkanal 9 – in der Zeichnung auf der linken Seite – in den katalytisch wirkenden Festkörper 1 ein und verläßt ihn über den ebenfalls als Anschlußstutzen ausgebildeten Anschlußkanal 5 auf der rechten Seite der Zeichnung. In diesen Luftstrom wird über ein Düsenrohr 8 vor dem eintritt in den Festkörper ein Reduktionsmittel R eingespeist, welches mit dem Luftstrom als Trägergas in den katalytisch wirkenden Festkörper hineingetragen, mit dessen Oberfläche in Berührung gebracht und in ihm gespeichert wird. Mit der Drehung des katalytisch wirkenden Festkörpers gelangt der in dieser Weise mit dem Reduktionsmittel angereicherte Sektorabschnitt dann in den in der Darstellung über dem luftbeaufschlagten Sektor angeordneten Abgassektor des Festkörpers. In diesen Abgassektor treten die Abgase von der rechten Seite über den als Anschlußstutzen ausgeführten Anschlußkanal 3 ein und sie verlassen den Festkörper auf der linken Seite über den Anschlußkanal 7. Durch die Weiterdrehung gelangt dann der von den Abgasen beaufschlagte Sektor erneut in den Luftdurchströmten Sektor. Der dann wieder durch den Sektor strömende Luftstrom hat neben der erwähnten Aufgabe als Trägergas für eine feine Aufteilung des Reduktionsmittels über den Sektorabschnitt des Festkörpers zu wirken auch eine Reinigungsfunktion, indem auf der Eintrittsseite der Abgase in besonderem Umfang abgeschiedene Staubpartikel vom Luftstrom abgelöst und aus dem katalytisch wirkenden Festkörper ausgetragen werden. Schließlich kann dieser Luftstrom – erforderlichenfalls nach einer vorausgehenden Reinigung, beispielsweise über Zyklone – als Verbrennungsluft für die die Abgase erzeugende Feuerungsanlage verwendet werden.

Bei dem Ausführungsbeispiel gemäß Fig. 2 werden drei in paralleler Reihe angeordnete statische katalytisch wirkende Festkörper 12, 14, 12 periodisch im Wechsel mit Abgas bzw. Luft durchströmt. Durch entsprechende Umschaltung der Gasströme wird jeder katalytisch wirkende Festkörper nacheinander zunächst – wie für die Festkörper 12 dargestellt – von einem Luftstrom L von unten nach oben durchströmt und anschließend – wie beim katalytisch wirkenden Festkörper 14 angedeutet – durch von oben nach unten strömende Abgase beaufschlagt. Zur reduzierung der unerwünschten Abgasbestandteile wird – wie in dem in Fig. 2 links außen dargestellten Festkörper gestrichelt veranschaulicht ist – etwa zu Ende der Beaufschlagung durch den Luftstrom über eine Leitung 18 in diesen das Reduktionsmittel eingeleitet und – durch den Luftstrom über den Eintrittsquerschnitt aufgeteilt – in den katalytisch wirkenden Festkörper 12 eingetragen und mit dessen katalytisch wirkenden Flächen in Berührung gebracht. Andererseits kann auch so verfahren werden, daß neben den katalytisch wirkenden Festkörpern 12, 14 ein weiterer statischer Festkörper 16 vorgesehen wird, wobei dann die Periode der Durchströmung der Festkörper mit Luft und Reduktionsmittel in dem Sinne getrennt werden kann, daß das Reduktionsmittel – gegebenenfalls in Mischung mit einem Trägergas – im Anschluß an die Luftdurchströmung, jedoch vor der späteren Durchströmung mit den Abgasen in einem gesonderten Reduktionszyklus erfolgt. Dabei wird das Reduktionsmittel dann von der Austrittsseite über die in der Zeichnung gestrichelt dargestellte Leitung 20 mittels eines beispielsweise als Gebläse 22 ausgebildeten Förderorgans zurückgeführt und erneut in den Festkörper 16 eingespeist.

Fig. 3 zeigt eine gegenüber der in Fig. 1 veranschaulichten Verfahrensweise weiterentwickelte Verfahrensweise, bei welcher ebenfalls eine Kreislaufführung des Reduktionsmittels – ggf. in Mischung mit einem Trägergas – in einem von den Luft- und Abgassektoren L, A getrennten weiteren Sektor erfolgt. Dieser Sektor wird durch den gegenüberliegenden Seiten zugeordnete Sonden oder Kanalstutzen 31, 33 gebildet. An die Austrittsseite des Kanalstutzens 33 schließt eine Rückführungsleitung 35 an, über welche nicht im Festkörper zurückgehaltenes Reduktionsmittel aufgefangen und über das Förderorgan 37 zur Eintrittsseite zurückgeführt wird. Über eine Meßsonde 39 wird hierbei der Gehalt an Reduktionsmittel innerhalb des Trägergases ermittelt und über eine Meldeleitung 41 einem Regler 43 als Regelgröße aufgegeben.Abhängig von dem ermittelten Ist-Wert wird über eine von dem Regler 43 zu einem Regelventil 47 innerhalb der Reduktionsmittelleitung führenden Steuerleitung 45 eine zusätzliche Einspeisung von Reduktionsmittel derart gesteuert, daß das Reduktionsmittel im Trägergas wieder in der Soll-Konzentration enthalten ist. Diese Lösung schließt die Förderung des Reduktionsmittels zurück zur Eintrittsseite durch neu in den Kreislauf eingespeistes und gleichzeitig als Treibmittel wirkendes Reduktionsmittel ein.

**Ansprüche**

1. Verfahren zur selektiven Beseitigung von Stickoxiden aus Abgasen mittels eines Reduktionsmittels, unter Verwendung von katalytisch wirkenden Festkörpern, die aufgrund ihres strukturellen Aufbaus und/oder Ausbildung als Schüttbett mit den Abgasen durchströmbar sind, wobei das Reduktionsmittel gegebenenfalls in Mischung mit einem Trägergas und die Stickoxide enthaltenden Abgase periodisch alternierend mit dem katalytisch wirkenden Festkörper bzw. Abschnitten desselben derart in Berührung gebracht werden, daß das Reduktionsmittel durch einen oder mehrere Sektorabschnitte und die zu entstickenden Abgase zugleich durch andere Sektorabschnitte des relativ zu den Anschlußkanälen des Reduktionsmittels und der Abgase schrittweise oder kontinuierlich bewegten katalytisch wirkenden Festkörpers geführt und daß ferner parallel zu den Abgasen Reingase durch den katalytisch wirkenden Festkörper geführt werden, wobei, das Reduktionsmittel direkt dem Reingassektor des katalytisch wirkenden Festkörpers zugeführt wird.

2. Verfahren zur selektiven Beseitigung von Stickoxiden aus Abgasen mittels eines Reduktionsmittel unter Verwendung von katalytisch wirkenden Festkörpern, die aufgrund ihres strukturellen Aufbaus und/oder Ausbildung als Schüttbett mit den Abgasen durchströmbar sind, wobei das Reduktionsmittel gegebenenfalls in Mischung mit einem Trägergas und die Stickoxide enthaltenden Abgase periodisch alternierend mit dem katalytisch wirkenden Festkörper bzw. Abschnitten desselben derart in Berührung gebracht werden, daß das Reduktionsmittel durch ein oder mehrere Sektorabschnitte und die zu entstickenden Abgase zugleich durch andere Sektorabschnitte des relativ zu den Anschlußkanälen des Reduktionsmittels und der Abgase schrittweise oder kontinuierlich bewegten katalytisch wirkenden Festkörpers geführt und daß ferner parallel zu den Abgasen Reingase durch den katalytisch wirkenden Festköper geführt werden, wobei das Reduktionsmittel in zumindest einem weiteren Sektor zu dem von den zu entstickenden Abgasen und dem von den Reingasen durchströmten Sektor dem katalytisch wirkenden Festkörper zugeführt wird.

3. Verfahren zur selektiven Beseitigung von Stickoxiden aus Abgasen mittels eines Reduktionsmittels unter Verwendung von katalytisch wirkenden Festkörpern, die aufgrund ihres strukturellen Aufbaus und/oder durch Ausbildung als Schüttbett mit den Abgasen durchströmbar sind, wobei die Stickoxide enthaltenden Abgase periodisch alternierend im Wechsel mit Reingasen durch jeweils einen von wenigstens zwei statischen katalytisch wirkenden Festkörpern bzw. Abschnitte desselben geführt werden, dadurch gekennzeichnet, daß das Reduktionsmittel gegebenenfalls in Mischung mit einem Trägergas zeitlich vor den zu entstickenden Abgasen dem jeweils zugeordneten katalytisch wirkenden Festkörper zugeleitet wird.

4. Verfahren nach Anspruch 1, dadurch gekennzeichnet, daß das Reduktionsmittel dem katalytisch wirkenden Festkörper unter Aufteilung in Teilströme über ein Düsenrohr zugeführt wird.

5. Verfahren nach einem der Ansprüche 1 bis 4, dadurch gekennzeichnet, daß das Reduktionsmittel dem katalytisch wirkenden Festkörper auf dessen einer Seite über eine erste Sonde zugeführt und der nicht im Festkörper zurückgehaltene Anteil des Reduktionsmittels über eine zweite, auf der gegenüberliegenden Seite vorgesehene Sonde aus dem Festkörper abgeleitet wird.

6. Verfahren nach Anspruch 5, dadurch gekennzeichnet, daß auf der der Eintrittsseite gegenüberliegenden Austrittsseite des katalytisch wirkenden Festkörpers der nicht im Festkörper zurückgehaltene Anteil des Reduktionsmittels seinem Strömungskanal entnommen, im Bypaß auf die Eintrittsseite zurückgeführt und erneut eingeleitet wird, und daß ferner in diesen Kreislauf zusätzliches Reduktionsmittel eingespeist wird.

7. Verfahren nach Anspruch 6, dadurch gekennzeichnet, daß die Einspeisung des Reduktionsmittels in den Kreislauf abhängig von auf der Austrittsseite des katalytisch wirkenden Festkörpers gemessenen Werten der Konzentration bzw. des Verbrauchs des Reduktionsmittels geregelt wird.

8. Verfahren nach Anspruch 6 oder 7, dadurch gekennzeichnet, daß die Rückführung des Reduktionsmittels unter Druckerhöhung durch ein Förderorgan vorgenommen Wird.

9. Verfahren nach Anspruch 8, dadurch gekennzeichnet, daß das im Kreislauf geführte Reduktionsmittel auf der Austrittsseite des katalytisch wirkenden Festkörpers bzw. im hieran anschließenden, jedoch vor der Einspeisung des Reduktionsmittels und vor dem Förderorgan gelegenen Abschnitt des Reduktionsmittel-Kreislaufs gedrosselt wird.

10. Verfahren nach Anspruch 8 oder 9, dadurch gekennzeichnet, daß die Rückführung des Reduktionsmittels von der Austrittsseite zur Eintrittsseite des katalytisch wirkenden Festkörpers durch das in den Kreislauf eingespeiste Reduktionsmittel als Treibmittel vorgenommen wird.

11. Verfahren nach einem der Ansprüche 1 bis 10, dadurch gekennzeichnet, daß zur Einleitung des Reduktionsmittels in den katalytisch wirkenden Festkörper ein Teilstrom der Reingase vor deren Eintritt in den Festkörper abgezweigt und vor der Einleitung als Trägergas mit dem Reduktionsmittel vermischt wird.

## Claims

1. Method for the selective elimination of nitrogen oxides from flue gases by means of a reducing agent, making use of catalytically active solid bodies through which the flue gases can flow on the basis of their structural make-up and/or configuration as a bed, the reducing agent, mixed with a carrier gas if desired, and the flue gases containing the nitrogen oxides, are brought periodically and alternately into contact with the catalytically active solid body or with sections of same such that the reducing agent is carried through one or more sector sections and the flue gases to be denitrated are carried at the same time through other sector sections of the catalytically active solid body which is moved step-wise or continuously relative to the passages connecting the reducing agent and the flue gases, and that furthermore clean gases are carried parallel to the flue gases through the catalytically active solid body, the reducing agent being fed directly to the clean gas sector of the catalytically active solid body.

2. Method for the selective elimination of nitrogen oxides from flue gases by means of a reducing agent, making use of catalytically active solid bodies through which the flue gases can flow on account of their structural make-up and/or configuration as a bulk bed, the reducing agent, mixed if desired with a carrier gas, and the flue gases containing nitrogen oxides, are brought periodically and alternately into contact with the catalytically active solid body or sections of same, such that the reducing agent is carried through one or more sector sections and the flue gases to be denitrated are carried simultaneously through other sector sections of the catalytically active solid body moved relative to the connecting passages of the reducing agent and of the flue gases, and that clean gases are carried parallel to the flue gases through the catalytically active solid bodies, the reducing agent being carried to the catalytically active solid body in at least one sector in addition to the sector through which the flue gases which are to be denitrated and to the sector through which the clean gases flow.

3. Method for the selective elimination of nitrogen oxides from flue gases by means of a reducing agent making use of catalytically active solid bodies through which the flue gases can flow on the basis of their structural make-up and/or their configuration as a bed, the flue gases containing nitrogen oxides being carried periodically in alternation with clean gases through one of at least two static, catalytically active solid bodies or sections of same, characterized in that the reducing agent, mixed if desired with the carrier gas, is fed prior to the flue gases to be denitrated to the associated catalytically active solid body.

4. Method according to claim 1, characterized in that the reducing agent is fed to the catalytically active solid body with division into partial stream through a nozzle tube.

5. Method according to any one of claim 1 to 4, characterized in that the reducing agent is fed to the catalytically active solid body through a first probe on its one side, and the portion of the reducing agent that is not retained in the solid body is conducted out of the solid body through a second probe provided on the opposite side.

6. Method according to claim 5, characterized in that, on the exit side of the catalytically active solid body opposite the entry side, the portion of the reducing agent not retained in the solid body is removed by means of the passage in which it flows, returned in the bypass to the entry side, and reintroduced, and that furthermore additional reducing agent is fed into this circuit.

7. Method according to claim 6, characterized in that the feed of the reducing agent into the circuit is regulated according to values of the concentration or consumption of the reducing agent measured at the exit side of the catalytically active solid body.

8. Method according to claim 6 or 7, characterized in that the feedback of the reducing agent is performed with elevation of pressure by a pumping means.

9. Method according to claim 8, characterized in that the reducing agent carried in the circuit is throttled on the exit side of the catalytically active solid body or in the section of the reducing agent circuit adjoining same but situated ahead of the infeed of the reducing agent.

10. Method according to claim 8 or 9, characterized in that the feedback of the reducing agent from the exit side to the entry side of the catalytically active solid body is performed by the reducing agent fed into the circuit as propellant.

11. Method according to any one of claims 1 to 10, characterized in that, for the introduction of the reducing agent into the catalytically active solid body, a portion of the clean gases is taken prior to their entry into the solid body and mixed with the reducing agent prior to introduction as carrier gas.

## Revendications

1. Procédé d'élimination sélective, au moyen d'un agent réducteur, d'oxydes d'azote de gaz résiduaires, en utilisant des corps solides à effet catalytique qui, en raison de leur constitution structurale et/ou de leur agencement en lit non tassé, peuvent être parcourus par les gaz résiduaires, l'agent réducteur, éventuellement en mélange avec un véhicule gazeux, et les gaz résiduaires contenant des oxydes d'azote étant mis en contact de façon périodiquement alternante avec le corps solide à effet catalytique, ou des tronçons de celui-ci, de manière telle que l'agent réducteur est mené à travers un ou plusieurs tronçons de secteur et les gaz résiduaires à débarasser des oxydes d'azote sont menés en même temps à travers d'autres tronçons de secteur du corps solide à effet catalytique, entraîné en mouvement, pas à pas ou en continu, par rapport aux canaux de raccordement de l'agent réducteur et des gaz résiduaires, et que, en outre, parallèlement aux gaz résiduaires, des gaz sont menés à travers le corps solide à effet catalytique, l'agent réducteur étant amené directement au secteur à gaz pur du corps solide à effet catalytique.

2. Procédé d'élimination sélective, au moyen d'un agent réducteur, d'oxydes d'azote de gaz résiduaires, en utilisant des corps solides à effet catalytique qui, en raison de leur constitution structurale et/ou de leur agencement en lit non tassé, peuvent être parcourus par les gaz résiduaires, l'agent réducteur, éventuellement en mélange avec un véhicule gazeux, et les gaz résiduaires contenant des oxydes d'azote étant mis en contact de façon périodiquement alternante avec le corps solide à effet catalytique, ou des tronçons de celui-ci, de manière telle que l'agent réducteur est mené à travers un ou plusieurs tronçons de secteur et les gaz résiduaires à débarasser des oxydes d'azote sont menés en même temps à travers d'autres tronçons de secteur du corps solide à effet catalytique, entraîné en mouvement, pas à pas ou en continu, par rapport aux canaux de raccordement de l'agent réducteur et des gaz résiduaires, et que, en outre, parallèlement aux gaz résiduaires, des gaz sont menés à travers le corps solide à effet catalytique, l'agent réducteur étant amené au corps solide à effet catalytique en au moins un autre secteur comparativement au secteur parcouru par les gaz résiduaires à débarasser des oxydes d'azote et par les gaz purs.

3. Procédé d'élimination sélective, à l'aide d'un agent réducteur, d'ozydes d'azote de gaz résiduaires, en utilisant des corps solides à effet catalytique qui, en raison de leur constitution structurale et/ou de leur agencement en lit non tassé, peuvent être parcourus par les gaz résiduaires, les gaz résiduaires contenant des oxydes d'azote étant menés, de façon périodiquement alternante avec des gaz purs, dans chaque cas à travers un d'au moins deux corps solides statiques à effet catalytique, ou des tronçons de celui-ci, caractérisé par le fait que l'agent réducteur, éventuellement en mélange avec un véhicule gazeux, est amené, dans le temps, avant les gaz résiduaires à débarasser des oxydes d'azote au corps solide respectif à effet catalytique.

4. Procédé selon la revendication 1, caractérisé par le fait que l'agent réducteur est amené par une lance, avec subdivision en courants partiels, au corps solide à effet catalytique.

5. Procédé selon l'une des revendications 1 à 4, caractérisé par le fait que l'agent réducteur est amené au corps solide à effet catalytique sur un côté de celui-ci par une première sonde, et la proportion d'agent réducteur non retenue dans le corps solide est retirée du corps solide par une deuxième sonde, prévue sur le côté opposé.

6. Procédé selon la revendication 5, caractérisé par le fait que sur le côté sortie du corps solide à effet catalytique, faisant face au côté entrée, la proportion d'agent réducteur non retenue dans le corps solide est retirée de son canal d'écoulement, elle est ramenée, en bypass, au côté entrée et est introduite à nouveau et, en outre, de l'agent réducteur additionnel est admis dans ledit circuit.

7. Procédé selon la revendication 6, caractérisé par le fait que l'alimentation du circuit en agent réducteur est réglée en fonction des valeurs de concentration ou de consommation en agent réducteur, mesurées sur le côté sortie du corps solide à effet catalytique.

8. Procédé selon les revendications 6 ou 7, caractérisé par le fait que le recyclage de l'agent réducteur est effectué avec élévation de la pression par un organe transporteur.

9. Procédé selon la revendication 8, caractérisé par le fait que le circuit d'agent réducteur amené en circuit fermé est étranglé sur le côté sortie du corps solide à effet catalytique ou dans la section du circuit d'agent réducteur qui suit, mais qui est située en amont du point d'admission de l'agent réducteur et de l'organe transporteur.

10. Procédé selon l'une des revendications 8 ou 9, caractérisé par le fait que le recyclage de l'agent réducteur depuis le côté entrée du corps solide à effet catalytique vers le côté sortie de celui-ci, est effectué par l'agent réducteur additionnellement admis dans le circuit, en tant qu'agent propulseur.

11. Procédé selon l'une des revendications 1 à 10, caractérisé par le fait que, pour l'introduction de l'agent réducteur dans le corps solide à effet catalytique, on fait dériver un courant partiel des gaz purs, avant qu'ils n'entrent dans le corps solide, et on mélange ce courant partiel, avant son admission, en tant que véhicule gazeux avec l'agent réducteur.

# Fig.1

# Fig.2

# Fig.3